# EUROPEAN PATENT APPLICATION

(11) **EP 2 554 766 A1**
(43) Date of publication of application: **06.02.2013**
(21) Application number: 11761929.6
(22) Date of filing: 26.01.2011
(51) Int. Cl.: E04H 12/00, B01D 3/32

(54) **SUPPORTING DEVICE FOR SPACIAL NETWORK IN LARGE-SCALE TOWER**

(30) Priority: 31.03.2010 CN 201010136607
(71) Applicant: Tianjin Univtech Co., Ltd, Nankai District, Tianjin 300384 (CN)
(72) Inventor: ZHAO, Ruwen, Tianjin 300384 (CN)
(74) Representative: Larcher, Dominique
(86) International application number: PCT/CN2011/070645
(87) International publication number: WO 2011/120355

(57) **Abstract**

The invention discloses a space truss support device in a large-scale tower, the large-scale tower is provided with a foundation beam therein, pillars are distributed on the surface of the foundation beam at intervals, both layering and horizontal support of X-direction cross beams and Y-direction cross beams are realized between the pillars and between the pillars on the periphery and a tower body, and the X-direction cross beams and the Y-direction cross beams of all layers horizontally support functional members inside the tower respectively. The device consisting of the foundation beam, the pillars, the X-direction cross beams and the Y-direction cross beams has the characteristics of large intensity, good rigidness and small flexibility, in particular, the multi-pillar structure of the device achieves the division of the existing large-span long cross beam into small-span short cross beams, thus high levelness of tower tray can be guaranteed. With strong resistance to the impact of high-speed variable gas load, the device can effectively avoid the vibration accident caused by the impact, and in particular, a baffle in the structure is a segmental short baffle so as to avoid resonant vibration owing to the impact and guarantee long-term stable operation of the tower. The invention has the prominent advantages of reducing the manufacturing and installation difficulty as well as the investment of tower support device.

## Description

### Technical Field:

The invention belongs to inner parts of chemical tower, and more particularly relates to a space truss support device in a large-scale tower.

### Background Art:

I-steel or trussed beam is mostly adopted as the support main beam in the existing large-scale tower. The span of beam increases as the increase of tower diameter so that the flexibility of the support main beam must increase correspondingly; however, the increasingly higher demand on the levelness (levelness<3mm) of tower tray enables the existing support main beam to hardly meet the strict demand on the levelness of tower tray.

### Invention Content:

In order to solve the technical problem that the support main beam in the existing large-scale tower hardly meets the strict demand on the levelness of large-scale tower tray, the invention provides a space truss support device in the large-scale tower.

The following technical proposal is adopted to realize the above objective: the large-scale tower is provided with a foundation beam, the pillars are distributed on the upper surface of the foundation beam at intervals, both layering and horizontal support of X-direction cross beams and Y-direction cross beams are realized between the pillars and between the pillars on the periphery and a tower body, and the X-direction cross beams and the Y-direction cross beams of all layers horizontally support functional members inside the tower respectively.

The followings can also be adopted in the invention:
The foundation beam is supported on a pedestal.

The foundation beam is a fence beam, and the fence beam is formed by parallel and uniformly-spaced rectangular vertical plates and vertical ribbed slabs which are distributed between the vertical plates in a staggered manner and fixedly connected with the vertical plates.

The foundation beam is an arc bridge beam, the arc bridge beam is formed by flat chord upper rods, arc chord lower rods, and oblique rods and vertical rods which are connected with the flat chord upper rods and the arc chord lower rods in a vertical direction and are arranged at intervals, and spacing rods, which are connected with the flat chord upper rods and the arc chord lower rods respectively, are arranged between the adjacent arc bridge beams.

The foundation beam is a grill beam, the grill beam is composed of square grids formed by vertical plates interconnected vertically, and support plates are arranged on the surfaces of the pillar-supporting square grids.

The foundation beam is a lower head of the tower body.

The functional members supported by the X-direction cross beams and Y-direction cross beams horizontally are multi-overflow trays, multi-downcomer trays, dual-flow trays or baffles.

The pillars are section steels, support bases supporting the X-direction cross beams and Y direction cross beams are welded in a layered manner on the pillars, the pillars at the same row are positioned, at intervals, on a central line of downcomers and seal pans on the same perpendicular line of the multi-overflow trays or the multi-downcomer trays.

The X-direction cross beams and Y-direction cross beams are section steels, and the Y direction cross beams are positioned below tower tray exit weirs and below the central line of the seal pans.

The invention has the beneficial effects and the advantages that: the space truss support device of the invention consisting of the foundation beam, the pillars, the X-direction cross beams and the Y-direction cross beams has the characteristics of large intensity, good rigidness and small flexibility, in particular, the multi-pillar structure of the device achieves the division of the existing large-span long cross beam into small-span short cross beams, i.e. the X-direction cross beams and Y-direction cross beams of the support device, thus high levelness of tower tray can be guaranteed. With strong resistance to the impact of high-speed variable gas load, the device can effectively avoid the vibration accident caused by the impact, and in particular, a segmental jointed baffle of the device, in the embodiment in which the baffle is supported, can effectively avoid resonant vibration owing to the impact of high-speed variable gas load and guarantee long-term stable operation of the tower. The invention has the prominent advantages of reducing the manufacturing and installation difficulty as well as the investment of tower support device.

### Brief Description of Drawings

Figure 1 is a structural schematic diagram of embodiment 1.
Figure 2 is an "A"-direction view of the Figure 1.
Figure 3 is a structural schematic diagram of the fence beam.
Figure 4 is a structural schematic diagram of the arc bridge beam.
Figure 5 is a structural schematic diagram of the grill beam.
Figure 6 is an "A"-direction view of the Figure 5.
Figure 7 is a structural schematic diagram of the lower head.
Figure 8 is a structural schematic diagram of the embodiment 2.
Figure 9 is an "I" partial enlarged view of the Figure 8.
Figure 10 is an "A"-direction view of the Figure 9.
Figure 11 is a structural schematic diagram of the Y-direction cross beam with symmetrical angle steels.
Figure 12 is a structural schematic diagram of the Y-direction cross beam with symmetrical rectangular plates.

The numbers in the figures are as below: 1 pedestal, 2 fence beam, 2-1 vertical plate, 2-2 ribbed slab, 3 pillar, 4 support base, 5 X-direction cross beam, 6 baffle, 7 Y-direction cross beam, 7-1 symmetrical channel steel, 7-2 symmetrical angle steel, 7-3 symmetrical rectangular plate, 7-4 angle steel connector, 8 arc bridge beam, 8-1 flat chord upper rod, 8-2 arc chord lower rod, 8-3 vertical rod, 8-4 oblique rod, 8-5 connecting rod, 9 grill beam, 10 tower body, 11 lining board, 12 annular pedestal, 13 support plate, 14 lower head, 15 tower tray exit weir, 16 down-flow plate and 17 overflow tower tray.

### Detailed Description of Embodiments

Further description is made below to the invention with reference to the embodiments and the drawings thereof.

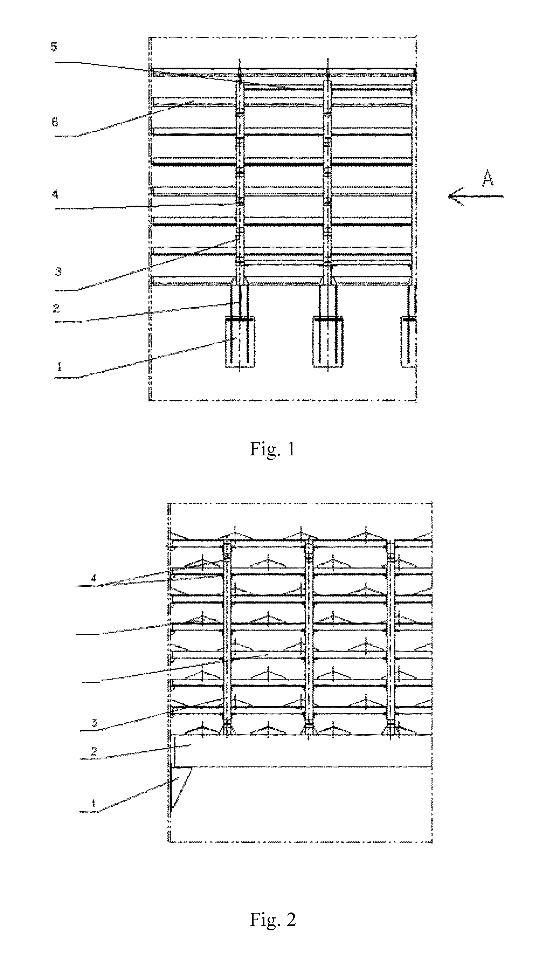

In the embodiment 1 shown as Figures 1 and 2, a fence beam 2, which is a foundation beam, is supported on a pedestal 1 at the bottom of the large-scale tower.

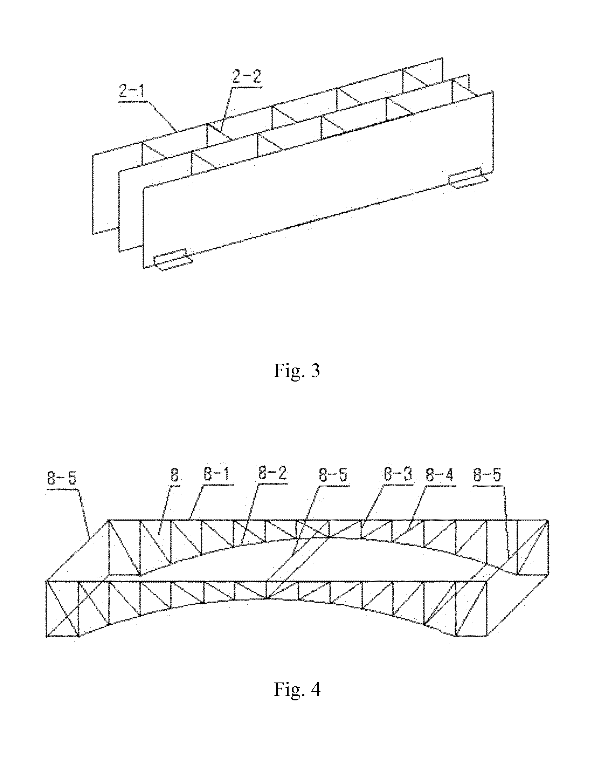

The fence beam, structurally shown as Figure 3, is formed by parallel and uniformly-spaced vertical plates 2-1 and ribbed slabs 2-2 which are distributed between the vertical plates in a staggered manner and fixedly connected with the vertical plates.

Shown as Figures 1,2 and 3, pillars 3 formed by square tubes are distributed at intervals on the surface of the fence beam 2, and both layering and horizontal support of X-direction cross beams 5 and Y-direction cross beams 7 are realized between the pillars and between the pillars on the periphery and a tower body. Two ends of the X-direction cross beams and the Y-direction cross beams in the embodiment 1 are fixedly connected with the corresponding pillars or with the corresponding pillars and support bases 4 arranged on tower body respectively.

The X-direction cross beams and the Y-direction cross beams of all layers are used for horizontally supporting functional members inside the tower and can also used for supporting dual-flow tower tray in the prior art, wherein the horizontally supported functional members inside the tower in the embodiment 1 shown as Figures 1 and 2 are baffles 6.

The foundation beam of the invention can also be an arc bridge beam 8 in the prior art shown as Figure 4, the arc bridge beam is formed by flat chord upper rods 8-1, arc chord lower rods 8-2, and oblique rods 8-4 and vertical rods 8-3 which are connected with the flat chord upper rods and the arc chord lower rods and are arranged at intervals. Connecting rods 8-5 are respectively arranged between the flat chord upper rods and the arc chord lower rods of the arc bridge beams 8 and are used for connecting the flat chord upper rods with the arc chord lower rods. Two ends of the bottom of the arc bridge beam are supported on the pedestal 1, and the pillars are distributed at intervals on the surface of the arc bridge beam, shown as Figure 1.

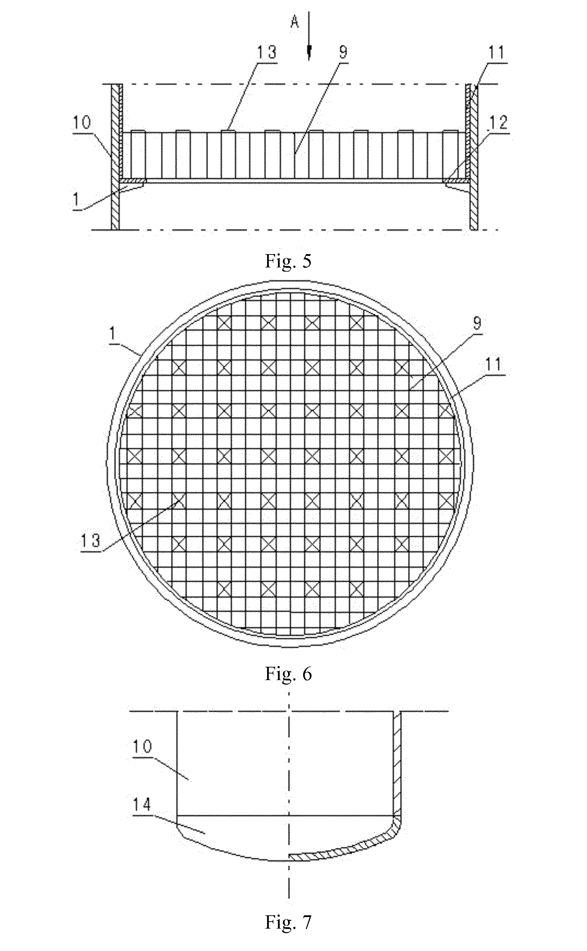

The foundation beam of the invention can also be a grill beam 9 shown as Figures 5 and 6, the grill beam is composed of square grids formed by vertical plates interconnected vertically, and support plates 13 for supporting the pillars 3 shown as Figure 1 are arranged on the surfaces of the square grids of the grill beam. The grill beam 9 is supported on an annular pedestal 12 arranged on a tower body 10, and a lining board 11 is arranged between the grill beam 9 and the tower body 10.

The foundation beam of the invention can also be a lower head of tower body in the existing tower shown as Figure 7, and the pillars 3 shown as Figure 1 are distributed at intervals on the surface of the lower head.

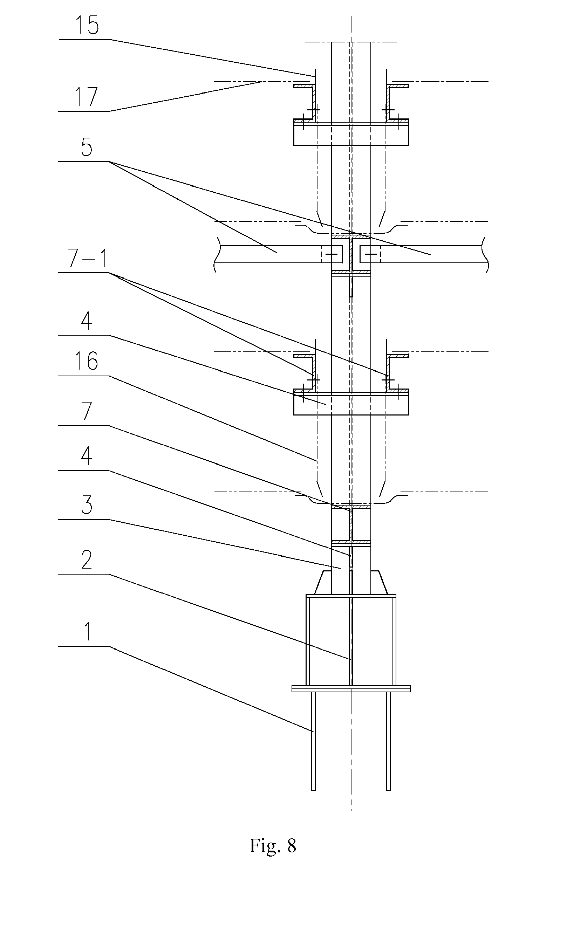

The embodiment 2, shown as Figures 8, 9 and 10, pertains to the examples in which the space truss support device of the invention supports multi-flow tower tray or multi-downcomer tower tray.

In the embodiment 2, the structures of the foundation beam 1, the X-direction cross beams 5 and the Y-direction cross beams 7 positioned at a central line of a seal pan in the space truss support device are identical, in width, to tower tray exit weirs 15 of the multi-flow tower tray or the multi-downcomer tower tray and are the same as the embodiment 1, and the difference therebetween only lies in the structural relationship between the pillars and the Y-direction cross beams positioned at the tower tray exit weirs.

Shown as Figure 8, the pillar 3 is I steel, and the pillars at the same row are positioned, at intervals, on the central line of the downcomers and the seal pans on the same perpendicular line of the multi-overflow trays or the multi-downcomer trays. The support bases 4 supporting the X-direction cross beams 5 and Y-direction cross beams 7 are welded in a layered manner on the pillars,

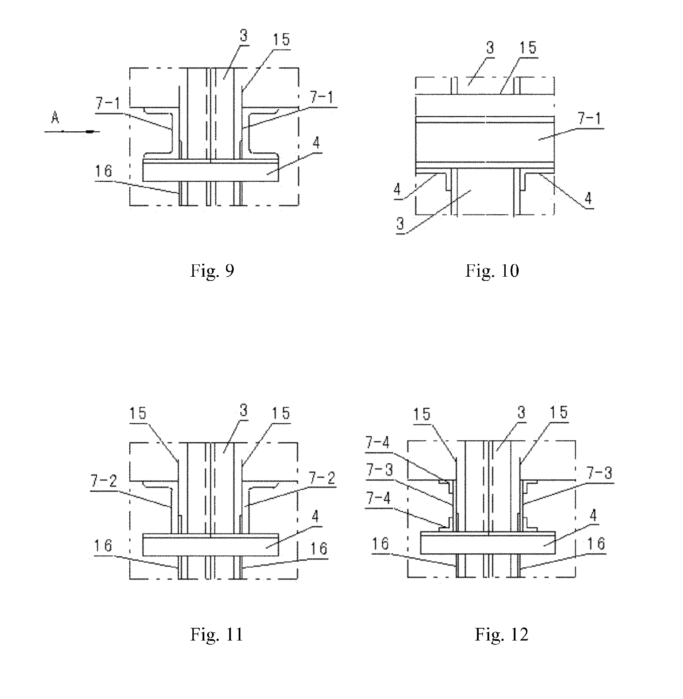

Shown as Figures 8 and 9, the Y-direction cross beams positioned below the tower tray exit weirs 15 are symmetrical channel steels 7-1.

Shown as Figure 11, the Y-direction cross beams positioned below the tower tray exit weirs 15 is symmetrical angle steels 7-2. Shown as Figure 12, the Y-direction cross beams positioned below the tower tray exit weirs 15 are symmetrical rectangular plates 7-3.

The lower parts of the symmetrical channel steels 7-1, the symmetrical angle steels 7-2 and the symmetrical rectangular plates 7-3 in Figures 8, 9, 10, 11 and 12 are connected with down-flow plates 16 to form downcomers, and the functional members supported by the symmetrical channel steels 7-1, the symmetrical angle steels 7-2 and the symmetrical rectangular plates 7-3 are the multi-flow tower tray or the multi-downcomer tower tray.

Shown as Figure 11, the Y-direction cross beams positioned below the tower tray exit weirs 15 is symmetrical angle steels 7-2. Shown as Figure 12, the X-direction cross beams and Y direction cross beams are section steels, and the Y-direction cross beams are positioned below the central line of the seal pans.

The tower tray exit weir is composed of symmetrical channel steels 7-1 with two jointed sides, and the symmetrical channel steels forming the Y-direction cross beams are supported on the two sides of the pillars 3, with the bottom ends being connected with tubes for liquid drainage.

## Claims

1. A space truss support device in a large-scale tower, **characterized in that**: the pillars are distributed on the upper surface of the foundation beam at intervals, both layering and horizontal support of X-direction cross beams and Y-direction cross beams are realized between the pillars and between the pillars on the periphery and a tower body, and the X-direction cross beams and the Y-direction cross beams of all layers horizontally support functional members inside the tower respectively.

2. The space truss support device according to claim 1, **characterized in that**: the foundation beam is supported on a pedestal.

3. The space truss support device according to claim 1, **characterized in that**: the foundation beam is a fence beam, and the fence beam is formed by parallel and uniformly-spaced rectangular vertical plates and vertical ribbed slabs which are distributed between the vertical plates in a staggered manner and fixedly connected with the vertical plates.

4. The space truss support device according to claim 1, **characterized in that**: the foundation beam is an arc bridge beam, the arc bridge beam is formed by flat chord upper rods, arc chord lower rods, and oblique rods and vertical rods which are connected with the flat chord upper rods and the arc chord lower rods in a vertical direction and are arranged at intervals, and spacing rods, which are connected with the flat chord upper rods and the arc chord lower rods respectively, are arranged between the adjacent arc bridge beams.

5. The space truss support device according to claim 1, **characterized in that**: the foundation beam is a grill beam, the grill beam is composed of square grids formed by vertical plates interconnected vertically, and support plates are arranged on the surfaces of the pillar-supporting square grids.

6. The space truss support device according to claim 1, **characterized in that**: the foundation beam is a lower head of the tower body.

7. The space truss support device according to claim 1, **characterized in that**: the functional members supported by the X-direction cross beams and Y-direction cross beams horizontally are multi-overflow trays, multi-downcomer trays, dual-flow trays or baffles.

8. The space truss support device according to claim 1 or 7, **characterized in that**: the pillars are section steels, support bases supporting the X-direction cross beams and Y-direction cross beams are welded in a layered manner on the pillars, the pillars at the same row are positioned, at intervals, on a central line of downcomers and seal pans on the same perpendicular line of the multi-overflow trays or the multi-downcomer trays.

9. The space truss support device according to claim 1 or 7, **characterized in that**: the X-direction cross beams and Y-direction cross beams are section steels, and the Y-direction cross beams are positioned below tower tray exit weirs and below the central line of the seal pans.
